# EUROPÄISCHE PATENTSCHRIFT

(11) **EP 3 045 022 B1**
(45) Veröffentlichungstag und Bekanntmachung des Hinweises auf die Patenterteilung: **08.11.2017**
(21) Anmeldenummer: 13763217.0
(22) Anmeldetag: 12.09.2013
(51) Int. Cl.: H05G 2/00

(54) **STRAHLFÜHRUNGSEINRICHTUNG UND EUV-STRAHLUNGSERZEUGUNGSVORRICHTUNG MIT EINER ÜBERLAGERUNGSEINRICHTUNG**
BEAM GUIDING APPARATUS AND EUV BEAM GENERATING DEVICE COMPRISING A SUPERPOSITION APPARATUS
SYSTÈME DE GUIDAGE DE FAISCEAU ET DISPOSITIF GÉNÉRATEUR DE RAYONNEMENT EUV ÉQUIPÉ D'UN SYSTÈME DE SUPERPOSITION

(43) Veröffentlichungstag der Anmeldung: 20.07.2016
(73) Patentinhaber: TRUMPF Lasersystems for Semiconductor Manufacturing GmbH, 71254 Ditzingen (DE)
(72) Erfinder: ENZMANN, Andreas, 78052 Villingen-Schwenningen (DE)
(74) Vertreter: Kohler Schmid Möbus Patentanwälte
(86) Internationale Anmeldenummer: PCT/EP2013/068939
(87) Internationale Veröffentlichungsnummer: WO 2015/036024

(56) Entgegenhaltungen:
- EP-A1- 2 182 412
- WO-A1-2012/069898
- WO-A1-2012/073087
- US-A1- 2013 026 393

## Beschreibung

Die vorliegende Erfindung betrifft eine Strahlführungseinrichtung sowie eine EUV-Strahlungserzeugungsvorrichtung mit einer solchen Strahlführungseinrichtung.

Eine Strahlführungseinrichtung für eine EUV-Strahlungserzeugungsvorrichtung ist beispielsweise aus der US 2011/0140008 A1 bekannt geworden. Die dort beschriebene Strahlführungseinrichtung dient zur Führung von Laserstrahlung, die in einer Strahlquelle, genauer gesagt in einem Treiberlasersystem, erzeugt und verstärkt wurde. Die Strahlführungseinrichtung führt den Laserstrahl von dem Treiberlasersystem zu einer Fokussiereinrichtung, um den Laserstrahl in einem Zielbereich zu fokussieren. In dem Zielbereich wird ein Target-Material bereitgestellt, welches bei der Bestrahlung mit dem Laserstrahl in einen Plasma-Zustand übergeht und hierbei EUV-Strahlung emittiert. Das Target-Material wird typischer Weise in einer Vakuum-Kammer bereitgestellt, in welcher der Laserstrahl über eine Öffnung eintritt.

Bei der Bestrahlung mit dem Laserstrahl wird ein Teil des Target-Materials (z.B. Zinn) verdampft, der sich auf den optischen Oberflächen von optischen Elementen ablagert, die in der Nähe des Zielbereichs angeordnet sind. Um diesem Problem zu begegnen, wird als Laserquelle bzw. als Treiberlaser in der Regel ein CO₂-Laser verwendet: CO₂-Laserstrahlung wird aufgrund ihrer hohen Wellenlänge von ca. 10,6 µm auch von optischen Elementen reflektiert, die eine vergleichsweise raue optische Oberfläche aufweisen, wie sie durch Zinn-Ablagerungen hervorgerufen wird. Die Verwendung einer Laserquelle bzw. eines Treiberlasers in Form eines CO₂-Lasers ermöglicht zudem bei bestimmten Target-Materialien, z.B. Zinn, eine hohe Konversionseffizienz zwischen der Eingangsleistung des Treiberlasers und der Ausgangsleistung der erzeugten EUV-Strahlung.

Aus der WO 2011/162903 ist eine Treiberlaseranordnung bekannt geworden, welche einen Seed-Laser zur Erzeugung eines Vor-Pulses und einen weiteren Seed-Laser zur Erzeugung eines Haupt-Pulses aufweist. Der Vor-Puls und der Haupt-Puls weisen unterschiedliche Wellenlängen auf und werden mittels eines Strahlkombinierers kombiniert, um entlang eines gemeinsamen Strahlwegs einen Verstärker sowie die auf die Treiberlaseranordnung folgende Strahlführungseinrichtung zu durchlaufen. Der Vor-Puls soll dazu dienen, das Target-Material zu beeinflussen, beispielsweise dieses aufzuheizen, zu expandieren, zu vaporisieren, zu ionisieren und/oder um ein schwaches oder ggf. ein starkes Plasma zu erzeugen. Der Haupt-Puls soll dazu dienen, den Hauptteil des von dem Vor-Puls beeinflussten Materials in den Plasmazustand überzuführen und hierbei EUV-Strahlung zu erzeugen.

Sowohl der Vor-Puls als auch der Haupt-Puls werden durch eine gemeinsame Öffnung in die Vakuum-Kammer geführt. Da in der Vakuum-Kammer ein Druck herrscht, der typischer Weise geringer ist als der Druck in der Strahlführung außerhalb der Vakuum-Kammer, ist es in der Regel erforderlich, diese Öffnung mittels eines transmissiven optischen Elements, welches beispielsweise ein Fenster, d.h. eine Planplatte, bilden kann, gasdicht gegen die Umgebung abzudichten. Das Material, aus dem das transmissive optische Element hergestellt ist, sollte einen möglichst strahlungsverlustfreien sowie qualitätsverlustfreien Durchtritt für beide Laserstrahlen ermöglichen. Weicht die Wellenlänge des Laserstrahls, der zur Erzeugung des Vor-Pulses dient, deutlich von der Wellenlänge des Laserstrahls ab, der zur Erzeugung des Haupt-Pulses dient, lässt sich diese Bedingung nicht oder nur mit hohem Aufwand erfüllen.

### Aufgabe der Erfindung

Der Erfindung liegt die Aufgabe zugrunde, eine Strahlführungseinrichtung sowie eine EUV-Strahlungserzeugungsvorrichtung mit einer solchen Strahlführungseinrichtung, welche zur Führung von zwei Laserstrahlen mit (deutlich) unterschiedlichen Wellenlängen ausgelegt ist, in ihrer Funktionsweise zu verbessern.

### Gegenstand der Erfindung

Ein erster Aspekt der Erfindung betrifft eine Strahlführungseinrichtung, umfassend: eine Vakuum-Kammer, in der zur Erzeugung von EUV-Strahlung ein Target-Material in einem Zielbereich einbringbar ist, wobei die Vakuum-Kammer eine erste Öffnung zum Eintritt eines ersten Laserstrahls sowie eine zweite Öffnung zum Eintritt eines zweiten Laserstrahls aufweist, wobei der erste Laserstrahl und der zweite Laserstrahl unterschiedliche Wellenlängen aufweisen, sowie eine Überlagerungseinrichtung zur Überlagerung der beiden durch die erste und die zweite Öffnung in die Vakuum-Kammer eintretenden Laserstrahlen zur gemeinsamen Strahlführung in Richtung auf den Zielbereich.
Erfindungsgemäß wird vorgeschlagen, den ersten und den zweiten Laserstrahl nicht durch eine gemeinsame Öffnung bzw. durch ein gemeinsames Fenster in die Vakuum-Kammer eintreten zu lassen, sondern zu diesem Zweck zwei unterschiedliche Öffnungen zu verwenden. Auf diese Weise kann ein für die jeweilige Wellenlänge optimiertes transmissives Material für das die jeweilige Öffnung gasdicht verschließende transmissive optische Element verwendet werden. Aufgrund des Eintritts der beiden Laserstrahlen durch unterschiedliche Öffnungen ergeben sich zunächst getrennte Strahlwege der beiden Laserstrahlen in der Vakuum-Kammer. Zur Zusammenführung der beiden Strahlwege ist eine Überlagerungseinrichtung vorgesehen, welche die beiden durch die unterschiedlichen Öffnungen eintretenden Laserstrahlen zusammenführt und diese überlagert.
Eine getrennte Strahlführung der beiden Laserstrahlen in der Vakuum-Kammer hätte hingegen zur Folge, dass sich dynamische Anregungen durch Schwingungen, thermisch bedingte Verlagerungen etc. von in der Vakuum-Kammer angeordneten optischen Elementen auf beiden die Laserstrahlen unterschiedlich auswirken, was unterschiedliche Längen der Strahlwege bzw. unterschiedliche Fluktuationen in der Länge der Strahlwege der beiden Laserstrahlen zur jeweiligen Fokusposition und somit eine Veränderung des relativen Abstandes zwischen den Fokuspositionen der beiden Laserstrahlen in dem Zielbereich zur Folge hätte. Der relative Abstand zwischen den beiden Fokuspositionen ist jedoch präzise einzuhalten, was durch die gemeinsame Strahlführung der beiden Laserstrahlen insbesondere bei deren Fokussierung bzw. beim Durchlaufen einer gemeinsamen Fokussiereinheit sichergestellt werden kann, da sich Fehler bei der Strahlführung auf die gemeinsam geführten Laserstrahlen in gleicher Weise auswirken. Erfindungsgemäß ist ein die erste Öffnung der Vakuum-Kammer gasdicht abschließendes, den ersten Laserstrahl transmittierendes optisches Element oder ein die zweite Öffnung der Vakuum-Kammer gasdicht abschließendes, den zweiten Laserstrahl transmittierendes optisches Element als Überlagerungseinrichtung ausgebildet. In diesem Fall beginnt die gemeinsame bzw. überlagerte Strahlführung direkt ab dem Eintritt des ersten bzw. des zweiten Laserstrahls in die Vakuum-Kammer an der ersten oder zweiten Öffnung. Die optischen Elemente an der ersten bzw. zweiten Öffnung können grundsätzlich neben ihrer transmittierenden Funktion auch noch andere optische Funktionen, wie zum Beispiel eine kollimierende oder fokussierende Funktion, für die durch diese hindurch tretenden Laserstrahlen erfüllen.

Bei einer bevorzugten Weiterbildung ist das transmittierende optische Element ein die Vakuum-Kammer gasdicht abschließendes Fenster. Das Fenster kann als eine planparallele Platte ausgebildet sein und bildet eine Apertur in der Wand der Vakuum-Kammer für den Durchtritt eines jeweiligen Laserstrahls. Das Fenster trennt den Innenraum der Vakuum-Kammer von dem Innenraum einer weiteren Kammer mit unterschiedlichem, typischer Weise deutlich größerem Druck als dem Druck in der Vakuum-Kammer. Das als Fenster ausgebildete transmittierende optische Element hat keine strahlformende Funktion.

Bevorzugt ist eine Weiterbildung, bei der das den zweiten Laserstrahl transmittierende optische Element an seiner in der Vakuum-Kammer angeordneten optischen Oberfläche eine für den ersten Laserstrahl reflektierende Beschichtung aufweist, oder umgekehrt. In diesem Fall wird an der reflektierenden Beschichtung der erste Laserstrahl reflektiert, während die Beschichtung für den zweiten Laserstrahl transmittierend ausgebildet ist. Bei geeigneter Ausrichtung des ersten Laserstrahls zur optischen Oberfläche mit der reflektierenden Beschichtung kann der Strahlengang der beiden Laserstrahlen überlagert werden, d.h. die Laserstrahlen verlaufen nach der Überlagerung parallel bzw. kollinear. Es versteht sich, dass eine Überlagerung auch in umgekehrter Weise realisiert werden kann. In diesem Fall trifft der zweite Laserstrahl zur Überlagerung mit dem ersten Laserstrahl auf die in der Vakuum-Kammer befindliche optische Oberfläche des den ersten Laserstrahl transmittierenden optischen Elements, an der eine für den zweiten Laserstrahl reflektierende Beschichtung angebracht ist.

Bevorzugt ist ebenfalls eine Weiterbildung, bei welcher das transmittierende optische Element unter einem (von 90° verschiedenen) Winkel zur Strahlrichtung des von dem optischen Element transmittierten ersten oder zweiten Laserstrahls ausgerichtet ist. Eine solche Anordnung unter einem Winkel zur Strahlrichtung ist insbesondere bei einem optischen Element in Form eines Fensters günstig, da dieses auch bei nicht senkrechtem Einfall keine bzw. eine vernachlässigbare optische Wirkung auf den transmittierten Laserstrahl aufweist. Die Anordnung des transmittierenden optischen Elements unter einem Winkel zur Strahlrichtung des transmittierten Laserstrahls, insbesondere unter einem Winkel zwischen ca. 30° und ca. 70°, ermöglicht es, den jeweils anderen, nicht transmittierten Laserstrahl unter einem vergleichsweise großen Winkel von ca. 90° zur Strahlrichtung des transmittierten Laserstrahls auf das transmittierende optische Element einzustrahlen, was die Überlagerung der beiden Laserstrahlen vereinfacht. Die Ausrichtung unter einem von 90° verschiedenen Winkel zur Strahlrichtung ist auch günstig, um an dem transmittierenden optischen Element zurück reflektierte Laserstrahlung für Messzwecke nutzen zu können.

Bei einer bevorzugten Weiterbildung ist in der Vakuum-Kammer eine Umlenkeinrichtung zur Umlenkung des ersten oder des zweiten Laserstrahls auf das die Überlagerungseinrichtung bildende transmittierende optische Element angeordnet. Durch die Umlenkeinrichtung kann der in die Vakuum-Kammer eintretende erste oder zweite Laserstrahl, derart gefaltet bzw. umgelenkt werden, dass er auf das transmittierende optische Element, genauer gesagt auf die reflektierend beschichtete optische Oberfläche des transmittierenden optischen Elements, auftrifft und an dieser reflektiert wird. Die Umlenkeinrichtung kann beispielsweise durch einen oder mehrere ggf. in ihrer Ausrichtung einstellbare Umlenkspiegel gebildet sein.

Bei einer weiteren bevorzugten Ausführungsform ist in der Vakuum-Kammer im Strahlengang nach der Überlagerungseinrichtung eine gemeinsame Fokussiereinrichtung zur Fokussierung der beiden Laserstrahlen in den Zielbereich angeordnet. Durch die gemeinsame Fokussiereinrichtung werden die beiden Laserstrahlen derart in den Zielbereich fokussiert, dass ein Target-Material im Zielbereich durch die fokussierte Laserstrahlen beeinflusst, d.h. in einen Plasma-Zustand überführt und hierbei EUV-Strahlung erzeugt werden kann. Die gemeinsame Fokussiereinrichtung kann beispielsweise ein strahlaufweitendes optisches Element, z.B. einen Paraboloidspiegel, und ein nachfolgendes fokussierendes optisches Element, z.B. einen Ellipsoidspiegel, die beide in der Vakuum-Kammer angeordnet sind. Die Fokussiereinheit kann auch transmissiv ausgebildet sein und z.B. eine Linse aufweisen. Thermisch bedingte Verlagerungen sowie ggf. erfolgende dynamische Anregungen der beiden nach der Überlagerungseinrichtung angeordneten Spiegel wirken sich daher auf beide Laserstrahlen gleichermaßen aus. Auf diese Weise kann sichergestellt werden, dass es nicht zu einer ungewollten Veränderung des relativen Abstandes der Fokuspositionen der beiden Laserstrahlen in dem Zielbereich kommt.

Eine weitere Ausführungsform der Strahlführungseinrichtung umfasst eine im Strahlengang des ersten oder des zweiten Laserstrahls vor der Überlagerungseinrichtung angeordnete Fokussiereinrichtung zur Fokussierung des ersten oder des zweiten Laserstrahls in Richtung auf den Zielbereich. Mit Hilfe einer solchen Fokussiereinrichtung, die nur den Strahlengang eines der beiden Laserstrahlen beeinflusst (typischer Weise im Strahlweg vor der Vakuum-Kammer), kann eine Fokussierung des ersten oder des zweiten Laserstrahls um einen konstanten oder ggf. variablen Betrag in Ausbreitungsrichtung vorgenommen werden, ohne die Fokusposition des anderen Laserstrahls zu beeinflussen. Auf diese Weise kann der Abstand zwischen den Fokuspositionen der beiden Laserstrahlen in dem Zielbereich verändert werden, und zwar typischer Weise entlang einer Richtung, die im Wesentlichen senkrecht zu einer Bewegungsrichtung des Target-Materials verläuft. Die Bewegung des Target-Materials kann entlang einer geradlinigen bzw. im Wesentlichen geradlinigen Bewegungsbahn, d.h. mit (im Wesentlichen) konstanter Bewegungsrichtung. Die Bewegungsrichtung kann beispielsweise der Schwerkraftrichtung entsprechen oder einer anderen Richtung, z.B. einer horizontalen Richtung. In letzterem Fall entspricht die Bewegungsbahn ausgehend vom Austritt des Target-Materials aus einer Bereitstellungseinrichtung streng genommen einer Wurfparabel, die aber aufgrund der hohen Geschwindigkeit des austretenden Target-Materials in guter Näherung als geradlinige Bewegungsbahn angesehen werden kann.

Bei einer bevorzugten Weiterbildung ist die Fokussiereinrichtung ausgebildet, eine durch eine Krümmung des als Fenster ausgebildeten transmittierenden optischen Elements hervorgerufene Strahlaufweitung des an der reflektierenden Beschichtung des Fensters reflektierten ersten oder zweiten Laserstrahls zu kompensieren. Die Krümmung des als Fenster ausgebildeten transmittierenden optischen Elements kann beispielsweise durch Unterschiede in den Drücken hervorgerufen werden, die auf gegenüberliegende Seiten des Fensters wirken, wobei sich typischer Weise aufgrund des größeren Drucks, welcher außerhalb der Vakuum-Kammer herrscht, das Fenster in die Vakuum-Kammer hinein wölbt, so dass die optische Oberfläche mit der reflektierenden Beschichtung eine konvexe Krümmung aufweist, die eine Strahlaufweitung des jeweils reflektierten Laserstrahls bewirkt. Durch eine vorausgehende Fokussierung kann die Strahlaufweitung bzw. Divergenz des jeweils reflektierten Laserstrahls vorteilhaft kompensiert werden, so dass dieser kollimiert wird, bevor er zusammen mit dem anderen Laserstrahl auf die gemeinsame Fokussiereinheit trifft. Die Fokussiereinrichtung, z.B. in Form einer Linse, kann ortsfest angeordnet sein und eine Brennweite oder eine Position im konvergenten oder im divergenten Strahlengang des jeweiligen Laserstrahls einnehmen, die geeignet ist, die zu erwartende Strahlaufweitung aufgrund der im Betrieb der Strahlführungseinrichtung auftretenden Krümmung des Fensters zu kompensieren.

Bevorzugt ist eine Weiterbildung, bei welcher die Fokussiereinrichtung zur Veränderung einer Fokusposition des ersten oder des zweiten Laserstrahls in Strahlrichtung des ersten oder des zweiten Laserstrahls ausgebildet ist. Auf diese Weise können die Fokuspositionen des ersten und/oder des zweiten Laserstrahls um einen variablen Betrag entlang der Ausbreitungsrichtung der Laserstrahlen verschoben werden. Die variable Fokussierung kann dazu genutzt werden, die Fokusposition des jeweiligen Laserstrahls unabhängig von der Fokusposition des anderen Laserstrahls in einer Richtung senkrecht zur Bewegungsrichtung des Target-Materials zu verändern, um an geeigneter Stelle auf das Target-Material einzuwirken.

Alternativ oder zusätzlich kann auch die durch die Krümmung bzw. eine Änderung der Krümmung des als Fenster ausgebildeten transmittierenden optischen Elements erzeugte Strahlaufweitung des reflektierten ersten oder zweiten Laserstrahls in variabler Weise kompensiert werden. Bei einer Veränderung der Fokusposition des jeweiligen Laserstrahls, die auf eine Veränderung der Krümmung des Fensters zurückzuführen ist, kann auf die Fokussiereinrichtung eingewirkt werden, so dass diese eine Veränderung der Fokusposition bewirkt, die einer durch die Veränderung der Krümmung hervorgerufenen Veränderung der Fokusposition entgegen gerichtet ist und die idealer Weise diese Veränderung gerade kompensiert. Auf diese Weise kann nach der Überlagerungseinrichtung ein kollimierter oder ggf. gewollt konvergenter oder divergenter Laserstrahl erzeugt werden. Zur zeitaktuellen Kompensation veränderlicher Krümmungen des Fensters kann eine Steuer-/Regeleinrichtung in der Strahlführungseinrichtung vorgesehen sein.

Bevorzugt umfasst die Strahlführungseinrichtung zusätzlich eine Messeinrichtung zur Messung einer Krümmung des als Fenster ausgebildeten transmittierenden optischen Elements. Durch die Messeinrichtung kann eine momentane Krümmung des Fensters bestimmt bzw. ermittelt werden. Die Ermittlung der Krümmung kann zeitaktuell erfolgen und somit instantan Veränderungen der Krümmung des Fensters und damit Veränderungen der Strahlaufweitung erfassen. Die von der Messeinrichtung gelieferten Informationen können vor der oben beschriebenen Steuer-/Regeleinrichtung genutzt werden, um durch die Änderung der Krümmung hervorgerufene Änderungen der Fokusposition des jeweiligen Laserstrahls auszugleichen bzw. zu kompensieren.

In einer bevorzugten Weiterbildung ist die Messeinrichtung zur Bestimmung eines Drucks in der Vakuum-Kammer und eines Drucks außerhalb der Vakuum-Kammer ausgebildet. Durch die Druckmessung, die z.B. mit Hilfe von zwei Drucksensoren erfolgen kann, kann eine von den beiden gemessenen Drücken abhängige Kenngröße bestimmt werden, die ein Maß für die Krümmung der reflektierenden optischen Oberfläche bildet. Beispielsweise kann es sich bei dieser Kenngröße um die Differenz aus den gemessenen Drücken, den Quotienten aus den gemessenen Drücken etc. handeln. Falls der Druck außerhalb der Vakuum-Kammer einen bekannten Wert aufweist, z.B. dem Umgebungsdruck (Atmosphärendruck) entspricht, kann ggf. auf das Vorsehen eines Drucksensors außerhalb der Vakuum-Kammer verzichtet werden. Die Kenngröße bzw. Veränderungen der Kenngröße können durch die Messeinrichtung bestimmt werden und z.B. als Signal an eine Steuer-/Regeleinrichtung übertragen werden, um eine Regelung der Fokusposition vornehmen zu können. Alternativ kann die Messung der Krümmung des optischen Elements auch direkt erfolgen, insbesondere mit Hilfe einer optischen Messung, beispielsweise in der Art eines Autokollimators. Auf das optische Element wird in letzterem Fall ein kollimierter Messstrahl gerichtet, der an der reflektierenden Oberfläche (oder ggf. an der außerhalb der Vakuum-Kammer befindlichen optischen Oberfläche) in sich zurück reflektiert wird. Mit Hilfe eines Strahlteilers kann sowohl der Reflex des Messstrahls als auch der ausgesandte Messstrahl auf eine Detektorfläche eines ortsauflösenden Detektors, z.B. einer Kamera, abgebildet und ausgewertet werden. Ist die den Messstrahl reflektierende Oberfläche plan (f= unendlich), haben sowohl der Messstrahl als auch der Reflex den gleichen Durchmesser auf der Detektorfläche. Wölbt sich die reflektierende Oberfläche konkav, so wird der Reflex fokussiert und auf dem Kamerabild als ein kleinerer Strahlfleck abgebildet. Wölbt sich die Oberfläche konvex, wird der Reflex aufgeweitet und auf dem Kamerabild als ein größerer Strahlfleck abgebildet. Aus dem Verhältnis zwischen dem Durchmesser des Messstrahls und dem Durchmesser des Reflexes kann auf die Brennweite bzw. auf die Krümmung des optischen Elements zurückgeschlossen werden (mittels Simulation oder Versuchen).

Bevorzugt ist ferner eine Weiterbildung, bei welcher das transmittierende optische Element an einer der Vakuum-Kammer abgewandten Oberfläche und/oder an einer in der Vakuum-Kammer angeordneten Oberfläche eine Anti-Reflexbeschichtung für den transmittierten ersten oder zweiten Laserstrahl aufweist. Auf diese Weise treten an den Oberflächen des transmittierenden optischen Elements keine oder kaum Reflexe auf, so dass die Laserstrahlen vollständig oder nahezu vollständig transmittiert werden. Verluste bzw. Streuungen werden somit in vorteilhafter Weise reduziert oder idealer Weise vollständig vermieden.

Ebenfalls bevorzugt ist eine Weiterbildung, bei der die Strahlführungseinrichtung eine Fokuseinstelleinrichtung zur Einstellung einer Fokusposition des ersten oder des zweiten Laserstrahls entlang einer Bewegungsrichtung des Target-Materials umfasst.

Mit Hilfe der Fokuseinstelleinrichtung kann die Fokusposition eines der Laserstrahlen entlang der Bewegungsrichtung des Target-Materials unabhängig von der Fokusposition des anderen Laserstrahls eingestellt werden, so dass der Abstand zwischen den beiden Fokuspositionen der Laserstrahlen entlang der Bewegungsrichtung des Target-Materials in dem Zielbereich einstellbar wird.

Bei einer bevorzugten Weiterbildung ist die Fokuseinstelleinrichtung zur Einstellung eines Einfallswinkels, insbesondere eines von einem senkrechten Einfall verschiedenen Einfallswinkels, des ersten oder des zweiten Laserstrahls beim Eintritt in die gemeinsame Fokussiereinheit ausgebildet. Zur Einstellung des Einfallswinkels kann die Fokuseinstelleinrichtung beispielsweise einen oder mehrere verkippbare Umlenkspiegel umfassen. Durch die Umlenkspiegel kann die Auftreffrichtung des ersten oder zweiten Laserstrahls auf das transmittierende optische Element und somit die Richtung des ersten oder des zweiten Laserstrahls beim Auftreffen auf die gemeinsame Fokussiereinheit gezielt eingestellt werden. Insbesondere kann die Fokuseinstelleinrichtung zur Einstellung einer geringfügigen Abweichung von einem parallelen Einfall der beiden Laserstrahlen auf das erste optische Element der gemeinsamen Fokussiereinheit dienen.

Bevorzugt ist eine weitere Weiterbildung, bei der die Strahlführungseinrichtung zusätzlich eine Steuer- und Regeleinrichtung zum Regeln mindestens einer der Fokuspositionen der beiden Laserstrahlen an eine Soll-Fokusposition umfasst. Zur gegebenenfalls erforderlichen Anpassung des Abstandes zwischen den beiden Fokuspositionen kann mittels der Steuer- und Regeleinrichtung mindestens eine Fokusposition eines der beiden Laserstrahlen auf eine Soll-Fokusposition geregelt werden. Für die Regelung können die Strahlengänge der Laserstrahlen mittels geeigneter Messeinrichtungen vermessen werden. Die Regeleinrichtung kann zur Beeinflussung der Fokuspositionen signaltechnisch beispielsweise mit der Fokuseinstelleinrichtung, insbesondere mit Aktoren der Fokuseinstelleinrichtung, verbunden werden, mit der bzw. mit denen die Strahlrichtungen der Laserstrahlen beeinflussbar sind, sowie mit Aktoren der Fokussiereinrichtung, beispielsweise zur Verschiebung von in dieser vorgesehenen fokussierenden Elementen, insbesondere von dort vorgesehenen Linsen. Die Steuer- und/oder Regeleinrichtung dient auch er Synchronisierung der die Laserstrahlen erzeugenden Strahlquellen mit der Bereitstellungseinrichtung für das Target-Material.

Bei einer bevorzugten Ausführungsform weist der zweite Laserstrahl eine Wellenlänge von mehr als 10 µm auf. Zur Erzeugung der Wellenlänge von mehr als 10 µm wird als Laserquelle bzw. als Treiberlaser in der Regel ein CO₂-Laser verwendet: CO₂-Laserstrahlung wird aufgrund ihrer hohen Wellenlänge von ca. 10,6 µm auch von optischen Elementen reflektiert, die eine vergleichsweise raue optische Oberfläche aufweisen, wie sie durch Zinn-Ablagerungen hervorgerufen werden kann, die bei der Verwendung von Zinn als Target-Material auftreten können. Die Verwendung einer Laserquelle bzw. eines Treiberlasers in Form eines CO₂-Lasers ermöglicht zudem bei Zinn als Target-Material eine hohe Konversionseffizienz zwischen der Eingangsleistung des Treiberlasers und der Ausgangsleistung der erzeugten EUV-Strahlung, sofern der CO₂-Laser zur Erzeugung des Haupt-Pulses verwendet wird.

Bevorzugt weist der erste Laserstrahl eine Wellenlänge von weniger als 3,0 µm auf. Zur Erzeugung der Wellenlänge von weniger als 3,0 µm wird als Laserquelle in der Regel ein Festkörperlaser verwendet, beispielsweise ein Nd:YAG Laser mit einer Wellenlänge von 1,06 µm, der typischer Weise als Kurzpulslaser betrieben wird, d.h. mit Pulslängen im Nanosekunden-Bereich oder im Pikosekunden-Bereich. Es versteht sich, dass auch Festkörperlaser oder andere Laser, die Wellenlängen von weniger als ca. 3,0 µm erzeugen, als Strahlquelle genutzt werden können, um den Vor-Puls zu erzeugen. Die Verwendung von Laserstrahlung mit vergleichsweise geringer Wellenlänge hat sich für die Erzeugung des Vor-Pulses als günstig erwiesen, da sich hierdurch sehr kurze Pulsdauern sowie eine scharfe Fokussierung des Vor-Pulses in dem Zielbereich realisieren lassen.

Die Aufgabe wird ferner gelöst durch eine EUV-Strahlungserzeugungsvorrichtung, umfassend: eine erste und zweite Strahlquelle zur Erzeugung des ersten und zweiten Laserstrahls, sowie eine Strahlführungseinrichtung wie oben beschrieben. Die EUV-Strahlungserzeugungsvorrichtung macht im Wesentlichen von denselben Vorteilen Gebrauch wie die oben beschriebene Strahlführungseinrichtung.

Bei der ersten Strahlquelle kann es sich insbesondere um einen Festkörperlaser (ggf. mit geeigneten Verstärkerstufen) handeln, die zur Erzeugung des Vor-Pulses dient, bei der zweiten Strahlquelle kann es sich um eine CO₂-Laserquelle (ggf. mit geeigneten Verstärkerstufen) zur Erzeugung des Haupt-Pulses handeln. Mittels der oben beschriebenen Steuer- bzw. Regeleinrichtung kann eine gewünschte Soll-Fokusposition eines jeweiligen Laserstrahls innerhalb des Zielbereichs geregelt bzw. eingestellt werden. Eine solche Regelung ist vorteilhaft, wenn strahlungsquellenseitig oder an anderen optischen Komponenten, beispielsweise an der als Fenster ausgebildeten Überlagerungseinrichtung, Störungen auftreten, die dazu führen, dass sich die Fokusposition verändert. Beispielsweise können durch die Regeleinrichtung Störungen in Form von Schwankungen in der Richtung oder Divergenz des Laserstrahls (beispielsweise Drift) "herausgeregelt" bzw. unterdrückt werden, sodass die beiden Laserstrahlen bzw. deren Fokuspositionen durch die Nachregelung an ihrer jeweiligen Soll-Fokusposition verbleiben.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:

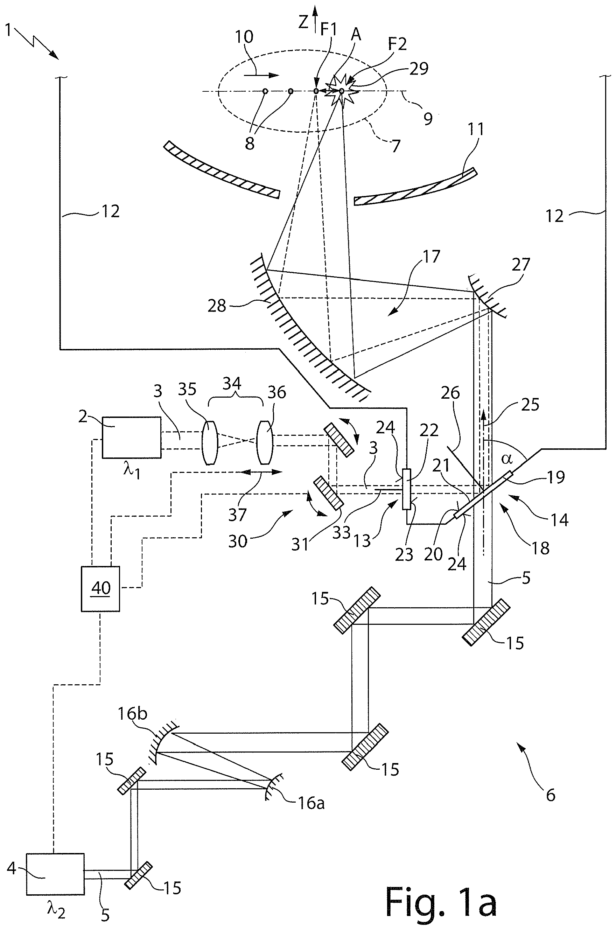

- Fig. 1a: ein Ausführungsbeispiel einer EUV-Strahlungserzeugungsvorrichtung mit einer Überlagerungseinrichtung in Form eines Fensters zur Überlagerung von zwei durch unterschiedliche Öffnungen in eine Vakuum-Kammer eintretenden Laserstrahlen,
- Fig. 1: b eine Detailansicht des Strahlengangs in einer Vakuum-Kammer der EUV-Strahlungserzeugungsvorrichtung gemäß Fig. 1 a,
- Fig. 2a: eine Darstellung des Strahlengangs in einer Vakuum-Kammer eines weiteren Ausführungsbeispiels einer EUV-Strahlungserzeugungsvorrichtung,
- Fig. 2b: eine Darstellung des Strahlengangs in der Vakuum-Kammer gemäß Fig. 2a, bei der eine durch eine Krümmung des Fensters bedingte Strahlaufweitung durch eine Fokussiereinrichtung kompensiert wird, und
- Fig. 2c: eine Darstellung des Strahlengangs in der Vakuum-Kammer gemäß Fig. 2b, bei der die Fokussiereinrichtung die Fokusposition eines Laserstrahls in Strahlausbreitungsrichtung relativ zur Fokusposition des anderen Laserstrahls verschiebt.

In der folgenden Beschreibung der Zeichnungen werden für gleiche bzw. funktionsgleiche Bauteile identische Bezugszeichen verwendet.

**Fig. 1a** zeigt eine EUV-Strahlungserzeugungsvorrichtung 1 mit einer ersten Strahlquelle 2 in Form eines Festkörperlasers, der einen ersten, gepulsten Laserstrahl 3 erzeugt und mit einer zweiten Strahlquelle 4 in Form eines als CO₂-Laser ausgebildeten Treiberlasers, der einen zweiten, ebenfalls gepulsten Laserstrahl 5 mit hoher Strahlungsleistung (>> 1 kW) erzeugt. Zur Erzeugung des zweiten Laserstrahls 5 mit hoher Strahlleistung kann die zweite Strahlquelle 4 mehrere Verstärker umfassen. Der erste Laserstrahl 3 und der zweite Laserstrahl 5 weisen im gezeigten Beispiel deutlich unterschiedliche Wellenlängen λ₁, λ₂ auf, d.h. Wellenlängen, die sich ungefähr um eine Größenordnung unterscheiden.

Im gezeigten Beispiel weist der von dem Festkörperlaser 2 in Form eines Nd:YAG Lasers, beispielsweise eines Scheibenlasers, erzeugte erste Laserstrahl 3 eine Wellenlänge λ₁ von ca. 1,06 µm auf. Der von dem CO₂-Laser erzeugte zweite Laserstrahl 5 weist eine Wellenlänge λ₂ von ca. 10,6 µm auf. Die EUV-Strahlungserzeugungsvorrichtung 1 umfasst ferner eine Strahlführungseinrichtung 6 mittels derer die beiden Laserstrahlen 3, 5 in Richtung auf einen Zielbereich 7 geführt werden, an dem ein Target-Material 8 in Form von Zinn-Tröpfchen angeordnet ist, um EUV-Strahlung 29 zu erzeugen. Auf die Darstellung von Messeinrichtungen zur Überwachung des Strahlengangs der Laserstrahlen 3, 5 wurde aus Gründen der Übersichtlichkeit verzichtet. Das Target-Material 8, d.h. die Zinn-Tröpfchen, werden mittels einer (nicht gezeigten) Bereitstellungseinrichtung erzeugt und dieses bewegt sich entlang einer vorgegebenen, im Wesentlichen geradlinigen Bewegungsbahn 9 bzw. eines vorgegebenen Pfades in einer Bewegungsrichtung 10, welche im gezeigten Beispiel horizontal verläuft. Es versteht sich, dass auch andere Bewegungsbahnen bzw. Bewegungsrichtungen für das Target-Material 8 möglich sind, beispielsweise kann die Bewegungsrichtung 10 der Schwerkraftrichtung entsprechen.

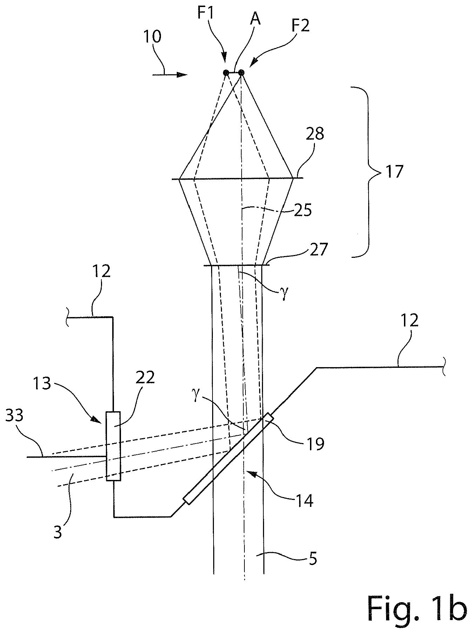

Für die Erzeugung der EUV-Strahlung 29 wird das Target-Material 8 zunächst durch den ersten Laserstrahl 3, welcher einen Vor-Puls bildet, beeinflusst, d.h. aufgeheizt, expandiert, vaporisiert, ionisiert und/oder in den Zustand eines schwachen oder ggf. eines starken Plasmas gebracht. Durch den zweiten Laserstrahl 5, welcher einen Haupt-Puls mit höherer Leistung bildet, wird der Hauptteil des von dem ersten Laserstrahl 3 beeinflussten Target-Materials 8 in den Plasmazustand überführt und hierbei die EUV-Strahlung 29 erzeugt. Damit der erste und der zweite Laserstrahl 3, 5 das Target 8, genauer gesagt ein jeweiliges sich entlang der vorgegebenen Bahn 9 bewegendes Zinn-Tröpfchen, in einem vorgegebenen zeitlichen Abstand treffen, ist es erforderlich, dass diese an unterschiedlichen Raumpunkten bzw. an unterschiedlichen Fokuspositionen F1, F2 entlang der Bewegungsbahn 9 des Targets 8 fokussiert werden, wie dies in Fig. 1 a gezeigt ist.

Zur gezielten Ausrichtung bzw. Bündelung der auf diese Weise erzeugten EUV-Strahlung 29 umfasst die EUV-Strahlungserzeugungsvorrichtung 1 einen EUV-Fokussierspiegel 11, typischer Weise in Form eines Ellipsoidspiegels. Das Target-Material 8, der EUV-Fokussierspiegel 11 und der Zielbereich 7, in dem das Target-Material 8 einbringbar ist, sind in einer Vakuum-Kammer 12 der Strahlführungseinrichtung 1 angeordnet, wohingegen die beiden Strahlquellen 2, 4 zur Erzeugung des ersten und des zweiten Laserstrahls 3, 5 außerhalb der Vakuum-Kammer 12 angeordnet sind, und zwar typischer Weise in einem gemeinsamen oder in zwei getrennten Gehäusen, die in Fig. 1 a nicht dargestellt sind. Um den ersten und den zweiten Laserstrahl 3, 5 in den Zielbereich 7 zu führen, werden die beiden Laserstrahlen 3, 5 ausgehend von den jeweiligen Strahlquellen 2, 4 über eine erste Öffnung 13 bzw. über eine zweite Öffnung 14 in die Vakuum-Kammer 12 geführt.

Für die Führung des ersten Laserstrahls 3 zur ersten Öffnung 13 umfasst die Strahlführungseinrichtung 6 eine Teleskopanordnung 34 zur Änderung des Strahlquerschnitts des ersten Laserstrahls 3, die eine erste, fokussierende Linse 35 und eine im Strahlengang nachfolgende zweite, kollimierende Linse 36 aufweist. Im Strahlengang des ersten Laserstrahls 3 nach der Teleskopanordnung 34 sind zwei Umlenkspiegel 31, 32 angeordnet, welche den ersten Laserstrahl 3 zur ersten Öffnung 13 hin umlenken.

Um den zweiten Laserstrahl 5 von der Strahlquelle 4 zu der zweiten Öffnung 14 zu führen, weist die Strahlführungseinrichtung 6 eine Mehrzahl von Umlenkspiegeln 15 sowie ein Paar von Parabolspiegeln 16a,b auf, wobei letztere zur Strahlaufweitung bzw. zur Änderung des Strahlquerschnitts des zweiten Laserstrahls 5 dienen.

Im Bereich der ersten Öffnung 13 ist ein die erste Öffnung 13 der Vakuum-Kammer 12 gasdicht abschließendes, den ersten Laserstrahl 3 transmittierendes optisches Element 22 angebracht, welches im gezeigten Beispiel als Fenster bzw. als dünne planparallele Platte ausgeführt ist. Entsprechend ist beim in Fig. 1 a gezeigten Beispiel auch an der zweiten Öffnung 14 der Vakuum-Kammer 12 ein diese gasdicht abschließendes und den zweiten Laserstrahl 5 transmittierendes optisches Element 19 angebracht.

Das Fenster 22 an der ersten Öffnung 13 ist für den ersten Laserstrahl 3, insbesondere für Wellenlängen von weniger als 3,0 µm, transparent und kann beispielsweise aus einem Quarzglas-Material gebildet sein. Das Fenster 19 an der zweiten Öffnung 14 ist für den zweiten Laserstrahl 5 transparent und kann aus (künstlich hergestelltem) Diamant gebildet sein, da dieses Material die durch die hohe Laserleistung (>> 1 kW) des zweiten Laserstrahls 5 eingebrachte Wärme aufgrund seiner hohen Wärmeleitfähigkeit effektiv abführen kann. Die beiden Fenster 19, 22 weisen an den der Vakuum-Kammer 12 abgewandten Oberflächen 24 sowie an den in der Vakuum-Kammer 12 angeordneten Oberflächen 20, 23 jeweils eine Anti-Reflexbeschichtung für den transmittierten ersten bzw. zweiten Laserstrahl 3, 5 auf, um durch Reflexion bedingte Leistungsverluste beim Durchtritt in die Vakuum-Kammer 12 zu minimieren.

Die Zuführung der beiden Laserstrahlen 3, 5 durch getrennte Öffnungen 13, 14 ist günstig, da auf diese Weise das Material eines jeweiligen Fensters 22, 19 auf die zu transmittierende Wellenlänge λ₁, λ₂ des ersten bzw. zweiten Laserstrahls 3, 5 abgestimmt werden kann und dadurch Leistungsverluste bzw. Verluste der Strahlqualität beim Durchtritt durch die Fenster 22, 19 vermieden werden können.

Um die Strahlwege des ersten und des zweiten Laserstrahls 3, 5 nach dem Eintritt in die Vakuum-Kammer 12 zusammenzuführen weist die Strahlführungseinrichtung 6 eine Überlagerungseinrichtung 18 auf. Bei dem in Fig. 1a gezeigten Beispiel ist die Überlagerungseinrichtung 18 durch das die zweite Öffnung 14 der Vakuum-Kammer 12 gasdicht abschließende zweite Fenster 19 gebildet, welches an seiner in der Vakuum-Kammer 12 angeordneten optischen Oberfläche 20 eine für den ersten Laserstrahl 3 reflektierende Beschichtung 21 aufweist, d.h. eine Beschichtung, die für die Wellenlänge λ₁ des ersten Laserstrahls 3 reflektierend wirkt. Es versteht sich, dass die reflektierende Beschichtung 21 so gewählt ist, dass diese auf den zweiten Laserstrahl 5 keine Auswirkung hat bzw. diesen transmittiert. Aufgrund des deutlichen Unterschieds zwischen den Wellenlängen λ₁, λ₂ der beiden Laserstrahlen 3, 5 ist eine derartige reflektierende Beschichtung 21 auf für dem Fachmann bekannte Weise leicht herzustellen.

Im gezeigten Beispiel ist das zweite Fenster 19 unter einem Winkel α von ca. 45° zur Strahlrichtung 25 des von dem zweiten Fenster 19 transmittierten zweiten Laserstrahls 5 ausgerichtet. Auch der erste Laserstrahl 3 trifft unter einem Winkel von 45° zum Normalenrichtung 26 auf die mit der reflektierenden Beschichtung 21 versehene optische Oberfläche 20 des zweiten Fensters 19 auf und wird an dieser um 90° umgelenkt, so dass beide Laserstrahlen 3, 5 parallel zueinander ausgerichtet werden und entlang eines gemeinsamen Strahlweges propagieren. Beide Laserstrahlen 3, 5 treffen daher gemeinsam und parallel ausgerichtet auf eine im Strahlweg nachfolgende gemeinsame Fokussiereinrichtung 17, mittels derer die beiden Laserstrahlen 3, 5 in den Zielbereich 7 fokussiert werden.

Die gemeinsame Fokussiereinrichtung 17 umfasst einen Paraboloidspiegel 27, der ein konvexes Off-Axis-Segment eines Paraboloids bildet und der zur Strahlaufweitung dient, sowie einen Ellipsoidspiegel 28, der ein konkaves Off-Axis-Segment eines Ellipsoids bildet und der zur Fokussierung der beiden aufgeweiteten Laserstrahlen 3, 5 in den Zielbereich 7 dient. Treffen die beiden Laserstrahlen 3, 5 parallel und koaxial auf den konvex gekrümmten Paraboloidspiegel 27 auf, werden diese an einer gemeinsamen Fokusposition in dem Zielbereich 7 fokussiert. Für die Wirkung als Vor-Puls bzw. als Haupt-Puls ist es jedoch erforderlich, dass die aus der gemeinsamen Fokussiereinrichtung 17 fokussiert austretenden Laserstrahlen 3, 5 an unterschiedlichen, in einem vorgegebenen Abstand A zueinander angeordneten Fokuspositionen F1, F2 innerhalb des Zielbereichs 7 fokussiert werden, da nur auf diese Weise ein zeitlicher Versatz zwischen dem Auftreffen der beiden gepulsten Laserstrahlen 3, 5 auf ein- und dasselbe Zinn-Tröpfchen realisiert werden kann.

Das Zinn-Tröpfchen, welches an der ersten Fokusposition F1 von einem Puls (Vor-Puls) des ersten Laserstrahls 3 getroffen wird, wird nachfolgend von einem Puls (Haupt-Puls) des zweiten Laserstrahls 5 an der zweiten Fokusposition F2 getroffen. Um dies zu erreichen, ist es typischer Weise erforderlich, den Abstand A zwischen den beiden Fokuspositionen F1, F2 entlang der Flugrichtung 10 der Zinn-Tröpfchen so zu wählen, dass die Flugdauer eines jeweiligen Zinn-Tröpfchens 8 zwischen den beiden Fokuspositionen F1, F2 dem zeitlichen Versatz zwischen zwei Laserpulsen der Strahlquellen 2, 4 entspricht. Um alle Zinn-Tröpfchen 8 auf die oben beschriebene Weise zur treffen, sollte auch der Abstand zwischen zwei benachbarten Zinn-Tröpfchen ein ganzzahliges Vielfaches des Abstandes A zwischen den beiden Fokuspositionen F1, F2 in Flugrichtung 10 der Zinn-Tröpfchen 8 sein.

Der Abstand A zwischen den beiden Fokuspositionen F1, F2 kann durch eine im Folgenden näher beschriebene Fokuseinstelleinrichtung 30 eingestellt werden, die im gezeigten Beispiel zur Beeinflussung der Strahlrichtung des ersten Laserstrahls 3 dient. Die Fokuseinstelleinrichtung 30 umfasst zwei mittels Aktoren verkippbare Umlenkspiegel 31, 32, welche es ermöglichen, die Strahlrichtung des ersten Laserstrahls 3 sowie die Position, an welcher der erste Laserstrahl 3 an der reflektierenden Beschichtung 21 auf das zweite Fensters 19 auftrifft zu variieren bzw. einzustellen.

Um den ersten Laserstrahl 3 an der in Fig. 1 a dargestellten Fokusposition F1 zu fokussieren, wird der erste Laserstrahl 3 von der Fokuseinstelleinrichtung 30 in einer bezüglich der Normalenrichtung 33 des ersten Fensters 22 geringfügig schräg verlaufenden Richtung ausgerichtet, so dass der erste Laserstrahl 3 nach seiner Reflexion an der optischen Oberfläche 20 des zweiten Fensters 19 nicht mehr parallel, sondern unter einem typischer Weise sehr kleinen (Einfalls-)winkel γ (in der Regel nicht mehr als ca. 10 mrad) zur Strahlachse 25 des zweiten Laserstrahls 5 in die gemeinsame Fokussiereinheit 17 eintritt, wie in der Detailansicht von Fig. 1b gut zu erkennen ist. Die gemeinsame Fokussiereinheit 17 ist in Fig. 1b durch horizontale Linien dargestellt, welche die Spiegelpositionen darstellen, an denen die Laserstrahlen 3, 5 von dem Paraboloidspiegel 27 aufgeweitet und von dem Ellipsoidspiegel 28 fokussiert werden.

Durch den mittels der Umlenkspiegel 31, 32 (vgl. Fig. 1a) erzeugten schrägen Einfall des ersten Laserstrahls 3 auf die gemeinsame Fokussiereinheit 17 wird dieser an einer Fokusposition F1 fokussiert, die von der Fokusposition F2 des zweiten Laserstrahls 5, der parallel zur optischen Achse auf den Parabolspiegel 27 trifft, um den Betrag A beabstandet ist. Durch eine Verkippung der Umlenkspiegel 31, 32 um jeweils geeignete Kippwinkel kann somit die Fokusposition F1 des ersten Laserstrahls 3 entlang der Bewegungsrichtung 10 des Target-Materials 8 verändert werden. Auf diese Weise kann auch der Abstand A zwischen den beiden Fokuspositionen F1, F2 entlang der Bewegungsrichtung 10 des Target-Materials eingestellt werden. Durch eine geeignete Verkippung der Umlenkspiegel 31, 32 kann zudem der Strahlversatz und damit der Auftreffbereich des ersten Laserstrahls 3 auf dem zweiten Fenster 19 so gewählt werden, dass der erste Laserstrahl 3 konzentrisch zum zweiten Laserstrahl 4 auf den Parabolspiegel 27 auftrifft.

Es versteht sich, dass alternativ oder zusätzlich auch eine Fokuseinstelleinrichtung zur Einstellung der Fokusposition des zweiten Laserstrahls 5 entlang der Bewegungsrichtung 10 des Target-Materials 8 in der Strahlführungseinrichtung 6 vorgesehen werden kann, beispielsweise indem zwei der Umlenkspiegel 15 im Strahlengang des zweiten Laserstrahls 5 motorisch verkippbar ausgebildet werden.

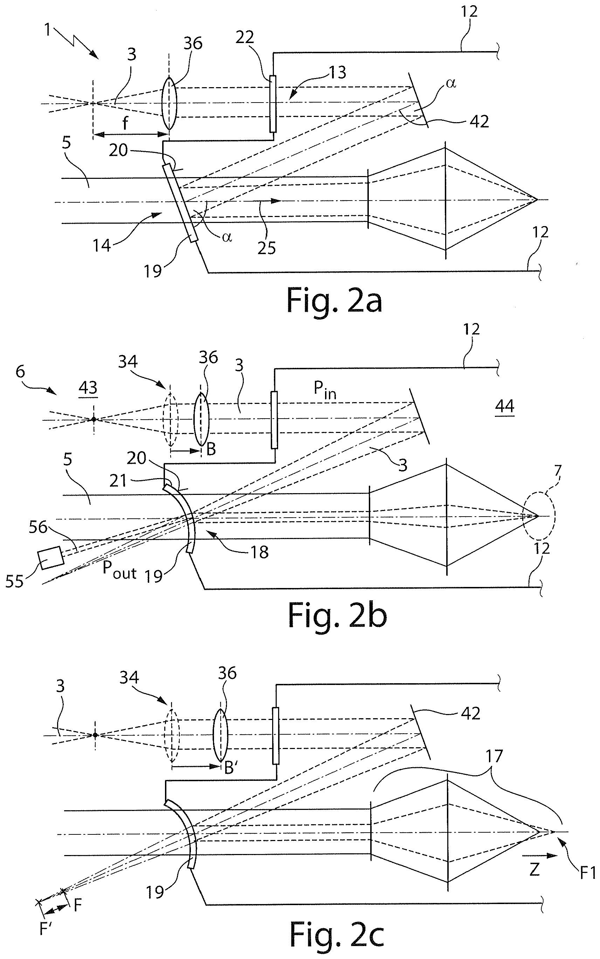

Um die Fokusposition F1 des ersten Laserstrahls 3 nicht nur entlang der Bewegungsrichtung 10 des Target-Materials 8, sondern auch in einer dazu senkrechten Richtung (Z-Richtung, vgl. Fig. 1a) einstellbar zu machen, kann die Teleskopanordnung 34 als Fokussiereinrichtung genutzt werden. In einer Grundstellung sind die beiden Linsen 35, 36 der Teleskopanordnung 34 im Abstand ihrer Brennweiten angeordnet, so dass der in die Teleskopanordnung 34 eintretende kollimierte erste Laserstrahl 3 die Teleskopanordnung 34 kollimiert (und um den gewünschten Abbildungsmaßstab vergrößert) verlässt, wie dies in Fig. 1a und in Fig. 2a dargestellt ist (Brennweite der zweiten Linse 36: f).

Im gezeigten Beispiel ist die zweite Linse 36 des Strahlteleskops 34, welche als Kollimationslinse wirkt, mittels eines geeigneten motorischen Antriebs in bzw. entgegen der Strahlrichtung 37 des ersten Laserstrahls 3 verschiebbar. Durch die Verschiebung der Kollimationslinse 36 aus der in Fig. 2a gezeigten Grundstellung kann aus dem kollimierten ersten Laserstrahl 3, der in das Strahlteleskop 34 eintritt, ein divergenter oder ein konvergenter Strahl geformt werden, je nachdem, ob die zweite Linse 36 in oder entgegen der Strahlrichtung 37 des ersten Laserstrahls 3 verschoben wird. Tritt der erste Laserstrahl 3 divergent oder konvergent in die gemeinsame Fokussiereinheit 17 ein, verändert sich die Fokusposition F1 des ersten Laserstrahls 3 in Z-Richtung, so dass das Target-Material 8 an unterschiedlichen Positionen in Z-Richtung von dem ersten Laserstrahl 3 getroffen werden kann.

Bei der in Fig. 2a gezeigten Vakuum-Kammer 12 treten abweichend von der Darstellung in Fig. 1a und Fig. 1b die beiden Laserstrahlen 3, 5 parallel zueinander in die Vakuum-Kammer 12 ein. Um in diesem Beispiel den in die Vakuum-Kammer 12 eingetretenen ersten Laserstrahl 3 auf das zweite Fenster 19 umzulenken, ist in der Vakuum-Kammer 12 eine als Faltungsspiegel 42 ausgebildete Umlenkeinrichtung angeordnet.

Das zweite Fenster 19 ist bei dem in Fig. 2a gezeigten Beispiel unter einem Winkel α zur Strahlrichtung 25 des zweiten Laserstrahls 5 ausgerichtet, der dem Winkel α entspricht, unter dem auch der Faltungsspiegel 42 zur Strahlrichtung 25 des zweiten Laserstrahls 5 ausgerichtet ist. Auf diese Weise wird der von dem Faltungsspiegel 42 umgelenkte erste Laserstrahl 3 durch die reflektierend beschichtete Oberfläche 20 des zweiten Fensters 19 so umgelenkt, dass der erste Laserstrahl 3 kollinear und überlagert zum zweiten Laserstrahl 5 verläuft. Es versteht sich, dass bei nicht parallelem Eintritt der beiden Laserstrahlen 3, 5 in die Vakuum-Kammer 12 der Winkel, unter dem der Faltungsspiegel 42 zur Strahlrichtung des zweiten Laserstrahls 5 ausgerichtet ist, typsicher Weise nicht mit dem Winkel α übereinstimmt, unter dem das zweite Fenster 19 zur Strahlrichtung 25 des zweiten Laserstrahls 5 ausgerichtet ist. Die Anordnung des zweiten Fensters 19 unter einem von 90° verschiedenen Winkel α zur Strahlrichtung 25 des zweiten Laserstrahls 5 ermöglicht die Nutzung von an dem zweiten Fenster 19 trotz Anti-Reflexbeschichtung zurück reflektierter Laserstrahlung für Messzwecke. Anders als in Fig. 2a dargestellt, kann auch das erste Fenster 22 unter einem von 90° verschiedenen Winkel zur Strahlrichtung 33 des ersten Laserstrahls 3 ausgerichtet werden, um an dem ersten Fenster 22 zurück reflektierte Strahlung des ersten Laserstrahls 3 für Messzwecke zu nutzen.

In **Fig. 2b** ist abweichend von Fig. 2a das den zweiten Laserstrahl 5 transmittierende optische Element 19 aufgrund eines Druckunterschieds zwischen der Umgebung 43 der Vakuum-Kammer 12 (z.B. einem Gehäuse) und dem Inneren 44 der Vakuum-Kammer 12 (sphärisch) gekrümmt und wölbt sich in das Innere der Vakuum-Kammer 12 hinein. Der erste Laserstrahl 3 wird an der konvex gekrümmten optischen Oberfläche 20 des zweiten Fensters 19 reflektiert und somit aufgeweitet. Um eine durch die Krümmung des zweiten Fensters 19 hervorgerufene Strahlaufweitung des ersten Laserstrahls 3 zu kompensieren, ist in Fig. 2b die zweite, kollimierende Linse 36 des Strahlteleskops in Strahlrichtung des ersten Laserstrahls 3 aus ihrer in Fig. 2a gezeigten Grundstellung heraus verschoben.

Durch die Verschiebung der im divergenten Strahlengang des ersten Laserstrahls 3 angeordneten zweiten Linse 36 würde der erste Laserstrahl 3 ohne die Reflexion an der optischen Oberfläche 20 des zweiten Fensters 19 auf einen in Fig. 2b gezeigten (virtuellen) Fokuspunkt F fokussiert. Der Verschiebeweg B der zweiten Linse 36 aus der Grundstellung wird bei dem in Fig. 2b gezeigten Beispiel so gewählt, dass die hierdurch bewirkte fokussierende Wirkung gerade die durch die Krümmung der mit der reflektierenden Beschichtung 21 versehenen optischen Oberfläche 20 hervorgerufene Aufweitung kompensiert, so dass der erste Laserstrahl 3 kollimiert auf die Fokussiereinheit 17 bzw. auf den Paraboloidspiegel 27 auftrifft.

Um den für die Kompensation erforderlichen Verschiebeweg B zu bestimmen, weist die Strahlführungseinrichtung 6 eine Messeinrichtung 55 zur Messung der Krümmung des zweiten Fensters 19 auf. Im gezeigten Beispiel handelt es sich bei der Messeinrichtung 55 um eine optische Messeinrichtung, welche Messstrahlung 56 auf das Fenster 19 bzw. auf die reflektierende optische Oberfläche 20 aussendet, um die Krümmung des Fensters 19 auf optischem Weg zu bestimmen. Im gezeigten Beispiel wird die kollimierte Messstrahlung 56 an dem zweiten Fenster 19 in sich zurück reflektiert und der Rückreflex des Messstrahls wird gemeinsam mit dem ausgesandten Messstrahl über einen Strahlteiler auf eine in der Messeinrichtung 55 vorgesehene Detektorfläche abgebildet. Anhand eines Vergleichs der Abmessungen, z.B. des Durchmessers, des Rückreflexes und des ausgesandten Messstrahls auf der Detektorfläche kann auf die Wölbung des zweiten Fensters 19 (plan, konvex, konkav) geschlossen werden, wozu beispielsweise eine durch Versuche oder Simulationen erzeugte Kennlinie genutzt werden kann, welche die Krümmung des zweiten Fensters 19 bzw. den zur Kompensation benötigten Verschiebeweg B der zweiten Linse 26 mit dem Verhältnis der Durchmesser von ausgesandter und zurück reflektierter Messstrahlung 56 in Beziehung setzt.

Alternativ oder zusätzlich kann die Messeinrichtung 55 zur Bestimmung einer Differenz zwischen dem Druck Pᵢₙ in der Vakuum-Kammer 12 und dem Druck Pₒᵤₜ außerhalb der Vakuum-Kammer 12, z.B. in einem dort gebildeten Gehäuse ausgebildet sein. In diesem Fall steht die Messeinrichtung 55 typischer Weise mit einem Drucksensor innerhalb der Vakuum-Kammer 12 und ggf. mit einem weiteren Drucksensor, der außerhalb der Vakuum-Kammer 12 angeordnet ist, in signaltechnischer Verbindung. Anhand der gemessenen Druckgradienten bzw. anhand einer von dem Druck Pᵢₙ innerhalb der Vakuum-Kammer 12 und dem Druck Pₒᵤₜ außerhalb der Vakuum-Kammer 12 abhängigen Kenngröße, beispielsweise der Druckdifferenz Pₒᵤₜ - Pᵢₙ oder dem Verhältnis zwischen den beiden Drücken Pₒᵤₜ / Pᵢₙ, kann anhand einer Kennlinie, welche die Kenngröße mit dem Verschiebeweg der Kollimationslinse 36 in Beziehung setzt, der für die Kompensation erforderliche Verschiebeweg B bestimmt und die zweite Linse 36 mittels einer Steuer- und/oder Regelungseinrichtung 40 so verschoben werden, dass die in Fig. 2b gezeigte Kompensation erfolgt und der erste Laserstrahl 3 kollimiert auf die gemeinsame Fokussiereinheit 17 auftrifft. Die Abhängigkeit bzw. die Kennlinie zwischen dem zur Kompensation benötigten Verschiebeweg B der Linse 36 und der mittels der Messeinrichtung 55 bestimmten Kenngröße für den Druckgradienten kann durch Versuche oder durch Simulationen erhalten werden.

**Fig. 2c** zeigt schließlich abweichend von Fig. 2b die Kollimationslinse 36 der Teleskopanordnung 34, die in Strahlrichtung um einen Betrag B' versetzt ist, der von dem für die Kompensation erforderlichen, in Fig. 2b gezeigten Betrag B abweicht, wodurch sich die (virtuelle) Fokusposition ebenfalls verschiebt, und zwar an eine Fokusposition F'. Durch die Verschiebung der Kollimationslinse 36 um den Betrag B in Strahlrichtung wird nicht nur wie in Fig. 2b die durch die Krümmung des zweiten Fensters 19 hervorgerufene Strahlaufweitung ausgeglichen, sondern darüber hinaus eine geringfügige Strahlaufweitung des an dem zweiten Fenster 19 reflektierten ersten Laserstrahls 3 erzeugt, die nach dem Durchlaufen der gemeinsamen Fokussiereinrichtung 17 zu einer Verschiebung der Fokusposition F1 des ersten Laserstrahls 3 in Z-Richtung führt. Die Fokusposition F1 des ersten Laserstrahls 3 verschiebt sich hierbei in dem Zielbereich 7 in Z-Richtung ungefähr um den Abstand zwischen den beiden virtuellen Fokuspositionen F, F' von Fig. 2b bzw. Fig. 2c.

Es versteht sich, dass zur Kompensation der Krümmung des zweiten Fensters 19 alternativ oder zusätzlich zu der Teleskopanordnung 34 im Strahlengang des ersten Laserstrahls 3 auch eine im Strahlengang des zweiten Laserstrahls 5 angebrachte fokussierende Einrichtung verwendet werden kann, beispielsweise einer der beiden zur Strahlaufweitung dienenden Paraboloidspiegel 16a,b, insbesondere der erste, konvex gekrümmte Paraboloidspiegel 16a. Auch kann ggf. an Stelle der zweiten, kollimierenden Linse 36 die erste, fokussierende Linse 35 des Strahlteleskops 34 verschoben werden. Gegebenenfalls kann auch auf die Möglichkeit einer Verschiebung der beiden Linsen 35, 36 verzichtet werden. In diesem Fall ist es günstig, wenn eine der beiden Linsen 35, 36 so weit aus der in Fig. 2a gezeigten Grundstellung heraus verschoben angeordnet wird, dass diese die im Mittel bzw. die bei typischen Betriebsbedingungen vorliegende Krümmung des zweiten Fensters 19 gerade kompensiert.

Die weiter oben erwähnte Steuer-/Regeleinrichtung bzw. Kontrolleinrichtung 40 steht zur Verschiebung der zweiten Linse 36 des Strahlteleskops 34 mit einem durch einen Doppelpfeil angedeuteten Antrieb bzw. Aktor 37 in Verbindung. Die Steuer-/Regeleinrichtung steht auch mit der Messeinrichtung 55 in signaltechnischer Verbindung, um den Verschiebeweg der zweiten Linse 36 in Abhängigkeit von der Krümmung des zweiten Fensters 19 sowie der ggf. gewünschten Verschiebung der ersten Fokusposition F1 in Z-Richtung zu steuern bzw. zu regeln. Die Steuer-/und Regeleinrichtung 40 ist auch ausgebildet bzw. programmiert, zur ggf. erforderlichen Veränderung des Abstandes A zwischen den beiden Fokuspositionen F1, F2 entlang der Bewegungsrichtung 10 des Target-Materials 8 die Strahlrichtung des ersten Laserstrahls 3 zu beeinflussen und steht zu diesem Zweck mit die beiden verkippbaren Umlenkspiegel 31, 32 ansteuernden Aktoren in signaltechnischer Verbindung. Schließlich ist die Steuer-/Regeleinrichtung 40 auch ausgebildet bzw. programmiert, die Pulserzeugung der beiden Strahlquellen 2, 4 mit der (nicht gezeigten) Bereitstellungseinrichtung für das Target-Material 8 zu synchronisieren. Die Steuer-/Regeleinrichtung 40 ermöglicht es auf diese Weise, auch bei Störungen in der Strahlführung, die beispielsweise durch eine Veränderung der Krümmung des zweiten Fensters 19 hervorgerufen werden, jeden der beiden Laserstrahlen 3, 5 an seiner Fokusposition F1, F2 zu halten, so dass diese mit einer jeweiligen Soll-Fokusposition übereinstimmt.

Alternativ zu der oben beschriebenen Überlagerung der beiden Laserstrahlen 3, 5 an einem der beiden Fenster 19, 22 kann eine Überlagerung der beiden Laserstrahlen 3, 5 in der Vakuum-Kammer 12 auch auf andere Weise realisiert werden. Insbesondere kann der Paraboloidspiegel 27 zu diesem Zweck einen inneren Flächenbereich aufweisen, an dem der zweite Laserstrahl 5 reflektiert wird und ein äußerer, den ersten ringförmig umgebender Flächenbereich kann zur Reflexion des ersten Laserstrahls 3 dienen. Durch geeignete Wahl der Einfallswinkel der Laserstrahlen 3, 5 können die Strahlachsen der beiden reflektierten Laserstrahlen 3, 5 überlagert werden, d.h. die Strahlachsen verlaufen nach dem Paraboloidspiegel 27 kollinear und die beiden reflektierten Laserstrahlen 3, 5 propagieren entlang eines koaxialen Strahlweges.

## Patentansprüche

1. Strahlführungseinrichtung (6), umfassend:
eine Vakuum-Kammer (12), in der zur Erzeugung von EUV-Strahlung ein Target-Material (8) in einem Zielbereich (7) einbringbar ist, wobei die Vakuum-Kammer (12) eine erste Öffnung (13) zum Eintritt eines ersten Laserstrahls (3) sowie einen zweite Öffnung (14) zum Eintritt eines zweiten Laserstrahls (5) aufweist, wobei der erste Laserstrahl (3) und der zweite Laserstrahl (5) unterschiedliche Wellenlängen (λ₁, λ₂) aufweisen, sowie
eine Überlagerungseinrichtung (18) zur Überlagerung der beiden durch die erste und die zweite Öffnung (13, 14) in die Vakuum-Kammer (12) eintretenden Laserstrahlen (3, 5) zur gemeinsamen Strahlführung in Richtung auf den Zielbereich (7),
**dadurch gekennzeichnet,**
**dass** ein die erste Öffnung (13) der Vakuum-Kammer (12) gasdicht abschließendes, den ersten Laserstrahl (3) transmittierendes optisches Element (22) oder ein die zweite Öffnung (14) der Vakuum-Kammer (12) gasdicht abschließendes, den zweiten Laserstrahl (5) transmittierendes optisches Element (19) als Überlagerungseinrichtung (18) ausgebildet ist.

2. Strahlführungseinrichtung nach Anspruch 1, bei welcher das transmittierende optische Element (19, 22) ein die Vakuum-Kammer (12) gasdicht abschließendes Fenster ist.

3. Strahlführungseinrichtung nach einem der Ansprüche 2 oder 3, bei welcher das den zweiten Laserstrahl (5) transmittierende optische Element (19) an seiner in der Vakuum-Kammer (12) angeordneten optischen Oberfläche (20) eine für den ersten Laserstrahl (3) reflektierende Beschichtung (21) aufweist, oder umgekehrt.

4. Strahlführungseinrichtung nach einem der vorhergehenden Ansprüche, bei welcher in der Vakuum-Kammer (12) eine Umlenkeinrichtung (42) zur Umlenkung des ersten oder des zweiten Laserstrahls (3, 5) auf das transmittierende optische Element (19, 22) angeordnet ist.

5. Strahlführungseinrichtung nach einem der vorhergehenden Ansprüche, bei welcher in der Vakuum-Kammer (12) im Strahlengang nach der Überlagerungseinrichtung (18) eine gemeinsame Fokussiereinrichtung (17) zur Fokussierung der beiden Laserstrahlen (3, 5) in den Zielbereich (7) angeordnet ist.

6. Strahlführungseinrichtung nach einem der vorhergehenden Ansprüche, weiter umfassend: eine im Strahlengang des ersten oder des zweiten Laserstrahls (3, 5) vor der Überlagerungseinrichtung (18) angeordnete Fokussiereinrichtung (36, 16a) zur Fokussierung des ersten oder des zweiten Laserstrahls (3, 5) in Richtung auf den Zielbereich (7).

7. Strahlführungseinrichtung nach Anspruch 6, bei welcher die Fokussiereinrichtung (36) ausgebildet ist, eine durch eine Krümmung des als Fenster ausgebildeten transmittierenden optischen Elements (19, 22) hervorgerufene Strahlaufweitung des an der reflektierenden Beschichtung (21) des Fensters reflektierten ersten oder zweiten Laserstrahls (3, 5) zu kompensieren.

8. Strahlführungseinrichtung nach Anspruch 6 oder 7, bei welcher die Fokussiereinrichtung (36) zur Veränderung einer Fokusposition (F1, F2) des ersten oder des zweiten Laserstrahls (3, 5) in Strahlrichtung des ersten oder des zweiten Laserstrahls (3, 5) ausgebildet ist.

9. Strahlführungseinrichtung nach einem der Ansprüche 2 bis 8, weiter umfassend:
eine Messeinrichtung (55) zur Messung einer Krümmung des als Fenster ausgebildeten transmittierenden optischen Elements (19, 22).

10. Strahlführungseinrichtung nach Anspruch 9, bei welcher die Messeinrichtung (55) zur Bestimmung eines Drucks (Pᵢₙ) in der Vakuum-Kammer (12) und eines Drucks (Pₒᵤₜ) außerhalb der Vakuum-Kammer (12) ausgebildet ist.

11. Strahlführungseinrichtung nach einem der vorhergehenden Ansprüche, bei welcher das transmittierende optische Element (19, 22) an einer der Vakuum-Kammer (12) abgewandten Oberfläche (24) und/oder an einer in der Vakuum-Kammer (12) angeordneten Oberfläche (20, 23) eine Anti-Reflexbeschichtung für den transmittierten ersten oder zweiten Laserstrahl (3, 5) aufweist.

12. Strahlführungseinrichtung nach einem der vorhergehenden Ansprüche, weiter umfassend: eine Fokuseinstelleinrichtung (30) zur Einstellung einer Fokusposition (F1, F2) des ersten oder des zweiten Laserstrahls (3, 5) in einer Bewegungsrichtung (10) des Target-Materials (8).

13. Strahlführungseinrichtung nach Anspruch 12, bei welcher die Fokuseinstelleinrichtung (30) zur Einstellung eines Einfallswinkels (γ) des ersten oder des zweiten Laserstrahls (3, 5) beim Eintritt in die gemeinsame Fokussiereinrichtung (17) ausgebildet ist.

14. Strahlführungseinrichtung nach Anspruch 12 oder 13, weiter umfassend: eine Regeleinrichtung (40) zum Regeln mindestens einer der Fokuspositionen (F1, F2) der beiden Laserstrahlen (3, 5) an eine Soll-Fokusposition.

15. EUV-Strahlungserzeugungsvorrichtung (1), umfassend: eine erste und zweite Strahlquelle (2, 4) zur Erzeugung des ersten und zweiten Laserstrahls (3, 5), sowie eine Strahlführungseinrichtung (6) nach einem der vorhergehenden Ansprüche.

## Claims

1. A beam guiding apparatus (6), comprising:
a vacuum chamber (12), in which a target material (8) is introducible into a target region (7) for generating EUV radiation, wherein the vacuum chamber (12) has a first opening (13) for the entry of a first laser beam (3) and a second opening (14) for the entry of a second laser beam (5), wherein the first laser beam (3) and the second laser beam (5) have different wavelengths (λ₁, λ₂), and
a superposition apparatus (18) for superposing the two laser beams (3, 5) entering into the vacuum chamber (12) through the first and second openings (13, 14) for common beam guidance in the direction of the target region (7),
**characterized in that**
an optical element (22) which closes off the first opening (13) of the vacuum chamber (12) in a gas-tight manner and transmits the first laser beam (3) or an optical element (19) which closes off the second opening (14) of the vacuum chamber (12) in a gas-tight manner and transmits the second laser beam (5) is embodied as superposition apparatus (18).

2. The beam guiding apparatus as claimed in claim 1, wherein the transmitting optical element (19, 22) is a window which closes off the vacuum chamber (12) in a gas-tight manner.

3. The beam guiding apparatus as claimed in either of claims 2 and 3, wherein the optical element (19) which transmits the second laser beam (5) has, at the optical surface (20) thereof arranged in the vacuum chamber (12), a coating (21) which reflects the first laser beam (3), or vice versa.

4. The beam guiding apparatus as claimed in anyone of the preceding claims, wherein a deflection apparatus (42) for deflecting the first or second laser beam (3, 5) onto the transmitting optical element (19, 22) is arranged in the vacuum chamber (12).

5. The beam guiding apparatus as claimed in anyone of the preceding claims, wherein a common focusing apparatus (17) for focusing the two laser beams (3, 5) into the target region (7) is arranged in the vacuum chamber (12) in the beam path downstream of the superposition apparatus (18).

6. The beam guiding apparatus as claimed in anyone of the preceding claims, further comprising: a focusing apparatus (36, 16a), arranged upstream of the superposition apparatus (18) in the beam path of the first or second laser beam (3, 5), for focusing the first or second laser beam (3, 5) in the direction of the target region (7).

7. The beam guiding apparatus as claimed in claim 6, wherein the focusing apparatus (36) is embodied to compensate a beam expansion of the first or second laser beam (3, 5) reflected at the reflecting coating (21) of the transmitting optical element (19, 22) embodied as a window caused by the curvature of the window.

8. The beam guiding apparatus as claimed in claim 6 or 7, wherein the focusing apparatus (36) is embodied to change the focal positions (F1, F2) of the first or second laser beam (3, 5) in the beam direction of the first or second laser beam (3, 5).

9. The beam guiding apparatus as claimed in one of claims 2 to 8, further comprising: a measurement apparatus (55) for measuring a curvature of the transmitting optical element (19, 22) embodied as a window.

10. The beam guiding apparatus as claimed in claim 9, wherein the measurement apparatus (55) is embodied to determine a pressure (Pᵢₙ) inside the vacuum chamber (12) and a pressure (Pₒᵤₜ) outside of the vacuum chamber (12).

11. The beam guiding apparatus as claimed in anyone of the preceding claims, wherein the transmitting optical element (19, 22) has an antireflection coating for the transmitted first or second laser beam (3, 5) at a surface (24) facing away from the vacuum chamber (12) and/or at a surface (20, 23) arranged in the vacuum chamber (12).

12. The beam guiding apparatus as claimed in anyone of the preceding claims, further comprising: a focus adjustment apparatus (30) for adjusting the focal position (F1, F2) of the first or second laser beam (3, 5) in a movement direction (10) of the target material (8).

13. The beam guiding apparatus as claimed in claim 12, wherein the focus adjustment apparatus (30) is embodied to adjust an angle of incidence (γ) of the first or second laser beam (3, 5) upon entry into the common focusing apparatus (17).

14. The beam guiding apparatus as claimed in claim 12 or 13, further comprising: a closed-loop control apparatus (40) for regulating at least one of the focal positions (F1, F2) of the two laser beams (3, 5) to a setpoint focal position.

15. An EUV radiation generating device (1), comprising: a first and second beam source (2, 4) for generating the first and second laser beams (3, 5), and a beam guiding apparatus (6) as claimed in one of the preceding claims.

## Revendications

1. Système de guidage de faisceau (6); comprenant :
une chambre à vide (12) dans laquelle un matériau cible (8) peut être introduit dans une zone cible (7) afin de générer un rayonnement EUV, laquelle chambre à vide (12) comporte un premier orifice (13) pour l'entrée d'un premier faisceau laser (3) ainsi qu'un deuxième orifice (14) pour l'entrée d'un deuxième faisceau laser (5), le premier faisceau laser (3) et le deuxième faisceau laser (5) présentant des longueurs d'onde différentes (λ₁, λ₂), et
un système de superposition (18) servant à superposer les deux faisceaux laser (3, 5) qui pénètrent dans la chambre à vide (12) par le premier et le deuxième orifice (13, 14) afin de les guider conjointement en direction de la zone cible (7), **caractérisé en ce**
**qu'**un élément optique (22) transmettant le premier faisceau laser (3), fermant de manière étanche aux gaz le premier orifice (13) de la chambre à vide (12) ou un élément optique (19) transmettant le deuxième faisceau laser (5), fermant de manière étanche aux gaz le deuxième orifice (14) de la chambre à vide (12) est conçu comme système de superposition (18).

2. Système de guidage de faisceau selon la revendication 1, dans lequel l'élément optique transmissif (19, 22) est une fenêtre fermant de manière étanche aux gaz la chambre à vide (12).

3. Système de guidage de faisceau selon la revendication 2 ou 3, dans lequel l'élément optique (19) transmettant le deuxième faisceau laser (5) présente sur sa surface optique (20) disposée dans la chambre à vide (12) un revêtement réfléchissant (21) pour le premier faisceau laser (3), ou inversement.

4. Système de guidage de faisceau selon l'une des revendications précédentes, dans lequel un système de déviation (42) pour dévier le premier ou le deuxième faisceau laser (3, 5) est disposé sur l'élément optique transmissif (19, 22) dans la chambre à vide (12).

5. Système de guidage de faisceau selon l'une des revendications précédentes, dans lequel un système de focalisation commun (17) pour focaliser les deux faisceaux laser (3, 5) dans la zone cible (7) est disposé dans la chambre à vide (12) après le système de superposition (18) dans le chemin optique.

6. Système de guidage de faisceau selon l'une des revendications précédentes, comprenant en outre : un système de focalisation (36, 16a) pour focaliser le premier ou le deuxième faisceau laser (3, 5) en direction de la zone cible (7) est disposé avant le système de superposition (18) dans le chemin optique du premier ou du deuxième faisceau laser (3, 5).

7. Système de guidage de faisceau selon la revendication 6, dans lequel le système de focalisation (36) est conçu pour compenser un élargissement de faisceau, provoqué par une courbure de l'élément optique transmissif (19, 22) réalisé sous la forme d'une fenêtre, du premier ou deuxième faisceau laser (3, 5) réfléchi sur le revêtement réfléchissant (21) de la fenêtre.

8. Système de guidage de faisceau selon la revendication 6 ou 7, dans lequel le système de focalisation (36) est conçu pour modifier une position focale (F1, F2) du premier ou du deuxième faisceau laser (3, 5) dans la direction de faisceau du premier ou du deuxième faisceau laser (3, 5).

9. Système de guidage de faisceau selon l'une des revendications 2 à 8, comprenant en outre : un système de mesure (55) pour mesurer une courbure de l'élément optique transmissif (19, 22) réalisé sous la forme d'une fenêtre.

10. Système de guidage de faisceau selon la revendication 9, dans lequel le système de mesure (55) est conçu pour déterminer une pression (Pᵢₙ) dans la chambre à vide (12) et une pression (Pₒᵤₜ) à l'extérieur de la chambre à vide (12).

11. Système de guidage de faisceau selon l'une des revendications précédentes, dans lequel l'élément optique transmissif (19, 22) présente sur une surface (24) éloignée de la chambre à vide (12) et/ou sur une surface (20, 23) disposée dans la chambre à vide (12) un revêtement anti-réflexion pour le premier ou le deuxième faisceau laser (3, 5) transmis.

12. Système de guidage de faisceau selon l'une des revendications précédentes, comprenant en outre : un système de réglage de foyer (30) pour régler une position focale (F1, F2) du premier ou du deuxième faisceau laser (3, 5) dans une direction de déplacement (10) du matériau cible (8).

13. Système de guidage de faisceau selon la revendication 12, dans lequel le système de réglage de foyer (30) est conçu pour régler un angle d'incidence (γ) du premier ou du deuxième faisceau laser (3, 5) lors de l'entrée dans le système de focalisation commun (17).

14. Système de guidage de faisceau selon la revendication 12 ou 13, comprenant en outre : un système de régulation (40) pour réguler au moins une des positions focales (F1, F2) des deux faisceaux laser (3, 5) sur une position focale de consigne.

15. Dispositif de génération d'un rayonnement EUV (1), comprenant : une première et une deuxième source de rayonnement (2, 4) pour générer le premier et le deuxième faisceau laser (3, 5) ainsi qu'un système de guidage de faisceau (6) selon l'une des revendications précédentes.
